Europäisches Patentamt

(19) European Patent Office

Office européen des brevets

(11) EP 0 857 792 A1

(12) EUROPEAN PATENT APPLICATION

(43) Date of publication:
12.08.1998 Bulletin 1998/33

(51) Int. Cl.$^6$: C21C 5/52, F27D 23/00

(21) Application number: 97310275.9

(22) Date of filing: 18.12.1997

(84) Designated Contracting States:
AT BE CH DE DK ES FI FR GB GR IE IT LI LU MC NL PT SE
Designated Extension States:
AL LT LV MK RO SI

(30) Priority: 29.01.1997 US 790948

(71) Applicant: THE BOC GROUP, INC.
Murray Hill, New Providence, New Jersey 07974-2082 (US)

(72) Inventor:
Satchell, Donald Prentice
Berkeley Heights, New Jersey 07922 (US)

(74) Representative:
MacLean, Martin David
The BOC Group plc,
Chertsey Road
Windlesham, Surrey GU20 6HJ (GB)

(54) Electric arc furnace slag foaming

(57) A method of producing a foamy slag in which the projected flame produced by burning fuel, for instance methane, within an oxidant is directed onto the slag so that the flame impinges on the slag, thereby to heat the foamy slag. Carbon containing particles are entrained in the flame so that the particles are heated by the flame and are projected into the slag to form and maintain a foamy slag. The carbon containing particles can be formed of coal that contains volatiles and the carbon containing particles are resident within the flame for a sufficient length of time for the volatiles to substantially burn-off and to contribute to the heating of the particles without appreciable oxidation of carbon contained within the coal.

FIG. I

## Description

The present invention relates to a method of producing a foamy slag within a steel making electric arc furnace, to overlie an iron-containing melt being processed therein.. More particularly, the present invention relates to such a method in which carbon containing particles are entrained in a projected flame that impinges on the foamy slag so that the foamy slag is heated by the flame and the carbon containing particles produce small carbon monoxide bubbles to foam the slag and reduce any iron oxide to iron.

Steel, in the form of scrap, and various grades of iron are processed within electric arc furnaces having one or more electrodes to produce an electric arc to heat the melt. In such furnaces, it is known to form a foamy slag over the melt. The foamy slag, which contains small carbon monoxide bubbles, buries and insulates the electrodes, prevents heat loss and oxidation of iron within the melt, and also prevents oxidation of the electrodes. In order to produce such foamy slag, high purity carbon is typically introduced into the electric arc furnace. Less expensive coal is not used as a source of carbon because it contains volatiles such as various coal tars which are endothermic. In any source of added carbon, the carbon must be heated by the melt and such heating adds thermodynamic inefficiency to electric arc furnace steel production.

The present invention provides a method of producing a foamy slag overlying an iron containing melt within a steel making electric arc furnace, said method comprising burning a fuel within an oxidant to produce a projected flame; directing said projected flame onto said slag so that said flame impinges on said slag to heat said slag; and entraining carbon containing particles into said flame so that said particles are heated by said flame and are projected into said slag to form and maintain a foamy slag

Such an arrangement provides a method of producing foamy slag in which the carbon containing material is preheated and, in fact, can be formed from such carbon-containing materials as coal.

The present invention provides a method of producing a foamy slag overlying an iron containing melt being processed within a steel making electric arc furnace. In accordance with the method, a fuel is burned within an oxidant to produce a projected flame. In this regard, the term "projected", as used herein and in the claims, means a flame that thrusts forward from its point of origin. The projected flame is directed onto the slag so that the flame impinges on the slag, to heat the slag. The term "impinge", as used herein and in the claims, means that the flame at least touches the foamy slag and preferably burrows into the slag such that the slag is disturbed. Carbon containing particles are entrained into the flame so that the particles are heated by the flame and are projected into the slag to form and maintain a foamy slag.

The foamy slag is formed by reactions of carbon with the slag to produce small carbon monoxide bubbles which contribute insulative and reducing functions to the electric steel making process. For instance, the carbon monoxide acts to reduce iron oxide present within the foamy slag, to iron. In a preferred method of the present invention, the carbon containing particles are formed of coal that contains volatiles. In accordance with such preferred method, the carbon containing particles are resident within the flame for a sufficient length of time for a "substantial" portion of the volatiles to burn off and contribute to the heating of the particles without appreciable oxidation of carbon being contributed by the coal. In this regard, "appreciable" as used herein and in the claims means that some oxidation is inevitable in the carbon containing materials as they are exposed to burning fuel.

However, the degree of oxidation is so minor, less than about 15%, that a sufficient amount of carbon particles would remain to form and maintain the foamy slag. The "substantial" portion of the coal volatiles would typically be greater than about 50% and less than 95%.

Since the burning fuel adds heat to the carbon-containing particles, heat is not lost in heating the particles within the foamy slag. Therefore, the present invention realises a thermodynamic efficiency not found in the prior art. Moreover, since the carbon containing particles can be formed of coal, further cost efficiency can be realised. In this regard, a substantial portion of the volatiles are burned off the coal while at the same time acting to heat the remaining carbon.

The invention will now be described by way of example and with reference to the accompanying drawings, in which:

Figure 1 is a schematic, sectional view of an apparatus for carrying out a method in accordance with the present invention; and

Figure 2 is an enlarged, fragmentary view of Figure 1.

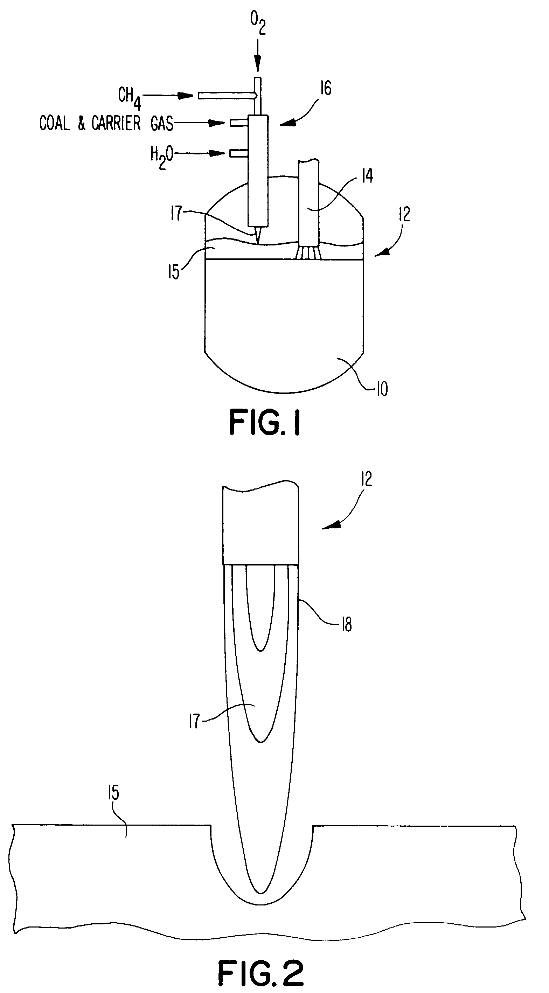

With reference to Figure 1, a melt 10 is heated within an electric arc furnace 12. Furnace 12 is provided with an electrode 14 which heats melt 10 through an electric arc.

In order to form a foamy slag 15, a burner 16 is provided that is designed to burn methane in an oxygen-containing gas, preferably high purity oxygen, namely, oxygen with a purity above 90%. The resulting combustion of the methane produces a projected flame 17. A coal-containing carrier gas is entrained in projected flame 17. The coal and carrier gas is formed by pulverising coal and entraining it within the carrier gas which can be nitrogen, methane, carbon monoxide or hydrogen. Such entrainment can be accomplished by means of dense phase transport, well known in the art. As illustrated, cooling water is circulated through burner 16 for cooling purposes.

With additional reference to Figure 2, burner 16 can be of the type that has coaxial passages in which an inner passage supplies the oxygen-containing gas, an intermediate passage supplies the methane, and an outer passage supplies the coal and carrier gas as a jet 18. Cooling passages can be provided for the cooling water to circulate and thus cool burner 18. Burner 16 can also be designed in a known manner such that projected flame 17 has a very high velocity and therefore a reduced static pressure that is less than that of carrier jet 18. As a result, carrier jet 18 is drawn into projected flame 17. As can be appreciated, the foregoing description of nozzle 18 while preferred is only one of many methods of effecting the present invention. For instance, a simple and inexpensive arrangement of side-by-side pipes could be used to advantage in accordance with the present invention. One pipe would be employed to expel a jet containing a high velocity mixture of oxygen and fuel and the other pipe would simultaneously expel a higher pressure dense phase transport of coal particles. The jet would be ignited to produce a projected flame and the higher pressure dense phase transport would form an adjacent carrier jet to be drawn into the projected flame.

As mentioned previously, the residence time in the flame is controlled to achieve the desired levels of devolatisation. The required residence time of the coal particle is primarily a function of the coal particle diameter. The following equation provides rough guidance for the required residence time:

$$t=d^{.75}/635$$

In such above equation, "d" is the diameter of the particle in micrometres, and "t" is particle residence time in the flame as measured in seconds. This approximate residence time requirement could be used to estimate the distance from the origin of the projected flame to the melt as a function of flame velocity and coal particle size.

## Claims

1. A method of producing a foamy slag overlying an iron containing melt within a steel making electric arc furnace, said method comprising:

   burning a fuel within an oxidant to produce a projected flame;

   directing said projected flame onto said slag so that said flame impinges on said slag to heat said slag; and

   entraining carbon containing particles into said flame so that said particles are heated by said flame and are projected into said slag to form and maintain a foamy slag.

2. A method as claimed in Claim 1, wherein said projected flame has a reduced static pressure that acts to entrain said carbon containing particles into said flame.

3. A method as claimed in Claim 2, wherein said carbon containing particles are entrained within a carrier gas to form a carrier jet having a higher pressure than said reduced static pressure of said projected flame and said carrier jet is directed in the same direction and adjacent to said flame so that said flame draws said carrier jet and therefore said carbon containing particles into said flame.

4. A method as claim in any preceding Claim, wherein said carbon containing particles are formed of coal containing volatiles and said carbon containing particles are resident within said flame for a sufficient length of time for said volatiles to substantially burn-off and to contribute to the heating of said particles without appreciable oxidation of carbon contained within said coal.

5. A method as claimed in Claim 4, when dependent on Claim 3, wherein said flame and carrier jet are coaxial with said carrier jet surrounding said flame.

6. A method as claimed in any preceding Claim, wherein said flame has a supersonic velocity.

7. A method as claimed in any preceding Claim, wherein said fuel comprises methane and said oxidant comprises high purity oxygen.

8. A method as claimed in Claim 3, or as claimed in any of Claims 4 to 7 when dependent on Claim 3, wherein said carrier gas is nitrogen, methane, carbon monoxide or hydrogen.

FIG. I

FIG.2

4

**European Patent Office**

# EUROPEAN SEARCH REPORT

**Application Number**

EP 97 31 0275

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP 0 753 586 A (ELTI S R L ;DALMINE TUBI IND S R L (IT)) 15 January 1997 <br> * abstract; claims 1-3,5-8,10-12 * <br> --- | 1-8 | C21C5/52 <br> F27D23/00 |
| Y | EP 0 548 042 A (VOEST ALPINE IND ANLAGEN) 23 June 1993 <br> * column 2, line 17 - column 4, line 26; claims; figures * <br> --- | 1-8 | |
| Y | EP 0 692 544 A (ISPAT HAMBURGER STAHLWERKE GMB) 17 January 1996 <br> * abstract; claim 1 * <br> --- | 1 | |
| Y | US 4 447 265 A (SCHWER JOHN W) 8 May 1984 <br> * claims * <br> --- | 1 | |
| Y | EP 0 637 634 A (VOEST ALPINE IND ANLAGEN) 8 February 1995 <br> * abstract; claims; figures * <br> ----- | 1 | |

| | |
|---|---|
| | **TECHNICAL FIELDS SEARCHED (Int.Cl.6)** |
| | C21C <br> F27D |

The present search report has been drawn up for all claims

| Place of search | Date of completion of the search | Examiner |
|---|---|---|
| THE HAGUE | 14 May 1998 | Oberwalleney, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document